# EUROPEAN PATENT APPLICATION

(11) **EP 1 195 121 A2**
(43) Date of publication of application: **10.04.2002**
(21) Application number: 01123904.3
(22) Date of filing: 05.10.2001
(51) Int. Cl.: A47J 31/40

(54) **Espresso coffee machine**

(30) Priority: 06.10.2000 IT TO000941
(71) Applicant: SGL Italia S.r.l., 10156 Torino (IT)
(72) Inventor: Cortese, Virginio, 10100 Torino (IT)
(74) Representative: Jorio, Paolo

(57) **Abstract**

An espresso coffee machine (1) having an infusion unit (2) for receiving a cartridge (3) containing at least one measure of ground coffee, and wherein the infusion unit (2) has an infusion seat (8) defined at the top by a hot-water sprinkler (14) which, in use, locks a cartridge (3) inside the infusion seat (8); the infusion unit (2) having a powered loading arm (18) fitted with a gripper (21) for cartridges (3), and which is movable to move the gripper (21) between the infusion seat (8) and an externally accessible loading position (40) via an unloading station (43) for waste cartridges (3).

## Description

The present invention relates to an espresso coffee machine.

More specifically, the present invention relates to an espresso coffee machine of the type comprising an infusion unit for receiving a disposable filter defined by a cylindrical cartridge containing at least one measure of ground coffee, and wherein the infusion unit comprises an infusion seat, an espresso coffee dispensing unit in a fixed position beneath the infusion seat, and a hot-water sprinkler defining the top of the infusion seat and movable to and from the dispensing unit to grip the cartridge against the dispensing unit and inside the infusion seat.

In known machines of the above type, the infusion seat is normally formed over a horizontal plate, in which is formed a track enabling the cartridges to slide from a loading position to an unloading station via the infusion seat located centrally with respect to the loading position and the unloading station.

To position a cartridge accurately in the infusion seat, two jaws are used, which are located on opposite sides of the track and rotate about respective vertical axes, in opposition to respective springs, to define the infusion seat in between. A new cartridge is fed into the infusion seat by feeding it along the track on to cam profiles carried by the jaws and so shaped that the new cartridge parts the jaws to engage the infusion seat and pushes the old cartridge, if any, out into the unloading position, and the respective springs cause the jaws to grip the new cartridge.

The springs constitute one of the major drawbacks of known machines of the above type, not only by jamming or breaking, on account of being subjected continually to steam and ground coffee remains, but also by opposing such resistance that the external manual force required of the user is often sufficient to dislodge the entire machine, and, if applied improperly by the user, may result in the new cartridge only partly engaging the infusion seat, which must therefore be cleared from the outside using a tool or by inserting a another cartridge.

It is an object of the present invention to provide an espresso coffee machine designed to eliminate the aforementioned drawbacks.

According to the present invention, there is provided an espresso coffee machine comprising an infusion unit for receiving a disposable filter defined by a cylindrical cartridge containing at least one measure of ground coffee, and wherein the infusion unit comprises an infusion seat, and a hot-water sprinkler defining the top of the infusion seat and movable, in use, to engage a said cartridge in fluidtight manner inside the infusion seat; the machine being characterized in that said infusion unit also comprises a powered loading arm in turn comprising a gripper for a said cartridge; said loading arm being movable to move said gripper along a given path between said infusion seat and an externally accessible loading position for a said cartridge and via an unloading station for waste cartridges.

A non-limiting embodiment of the invention will be described by way of example with reference to the accompanying drawings, in which:

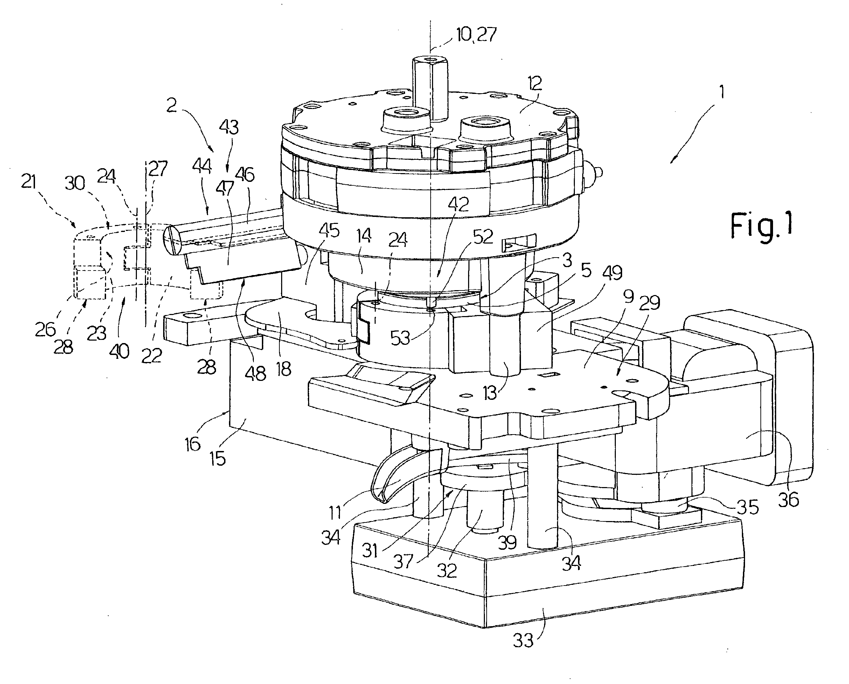

Figure 1 shows a three-quarter top view in perspective of a detail of a preferred embodiment of the machine according to the present invention;

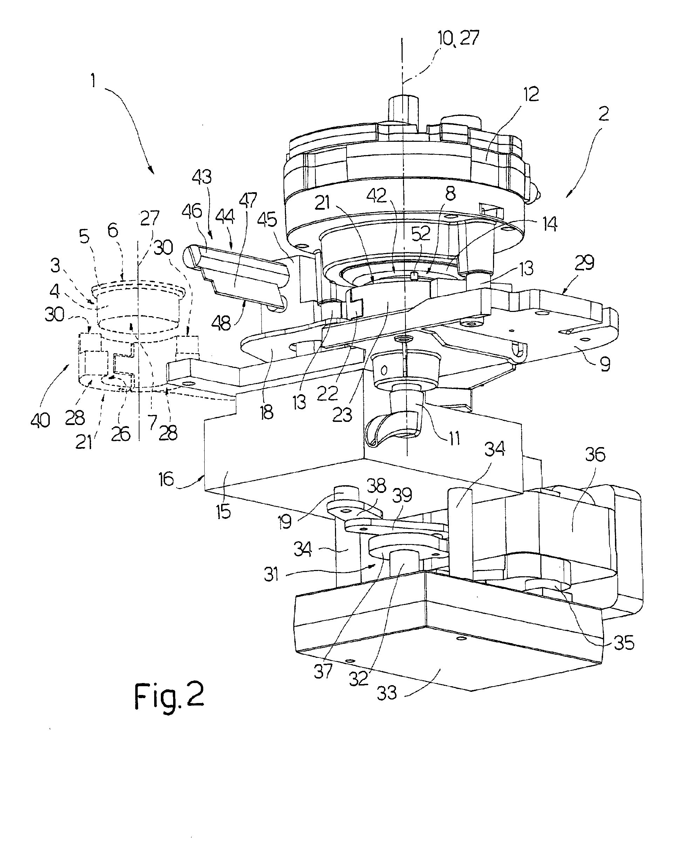

Figure 2 shows a three-quarter bottom view in perspective of the Figure 1 detail;
Figure 3 shows a plan view, with parts removed for clarity, of the Figure 1 detail.

Number 1 in the accompanying drawings indicates as a whole an espresso coffee machine comprising an infusion unit 2 for receiving a disposable filter defined by a rigid cartridge 3, which in turn is defined by a cylindrical lateral wall 4 having a top annular rib 5, and by two perforated flat end walls 6 and 7, and contains at least one measure of ground coffee or other infusible product.

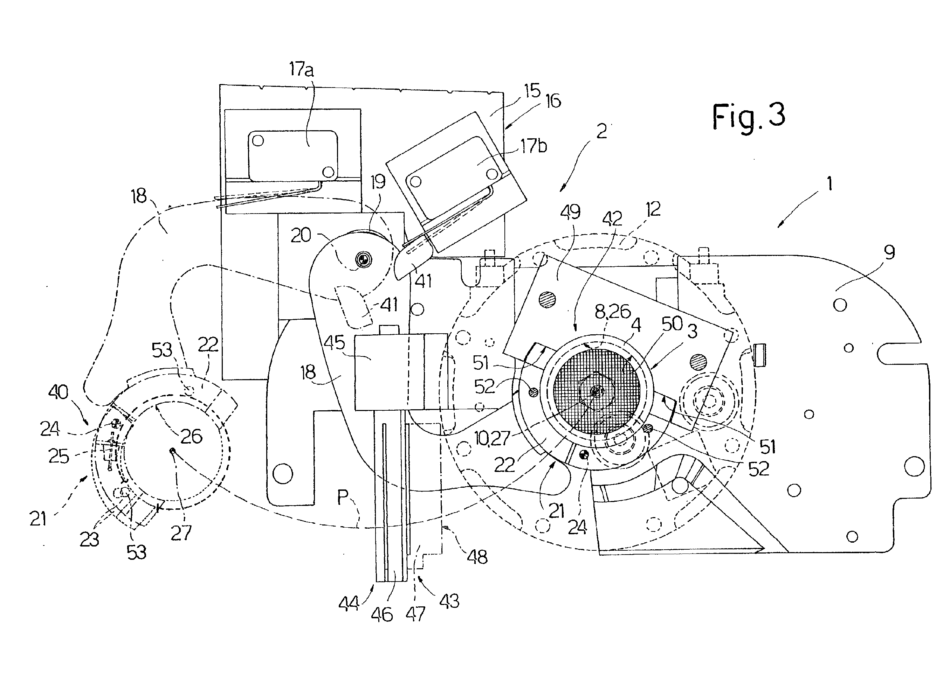

Infusion unit 2 comprises a cylindrical infusion seat 8 (Figure 3) defined at the bottom by a fixed plate 9 and coaxial with a vertical axis 10. Plate 9 supports a known espresso coffee dispensing unit 11 located in a fixed position beneath plate 9 and communicating, in known manner not shown, with infusion seat 8 through plate 9 and coaxially with axis 10.

Infusion unit 2 also comprises a boiler 12, which is located over plate 9, is coaxial with axis 10, is supported on plate 9 by means of vertical spacers 13 parallel to axis 10 and on either side of infusion seat 8, and communicates at the bottom, in known manner not shown, with a hot-water sprinkler 14. Sprinkler 14 is cylindrical, is coaxial with axis 10, faces plate 9 to define the top of infusion seat 8, and is movable in known manner along axis 10, and by the hot water issuing from boiler 12, from a raised rest position to a lowered work position in which sprinkler 14 engages in fluidtight manner and grips against plate 9 a cartridge 3 located over plate 9, inside infusion seat 8, and in an infusion position coaxial with axis 10.

To the bottom surface of plate 9, alongside dispensing unit 11 and offset with respect to axis 10, is connected a casing 15 of an electric control unit 16 comprising two limit microswitches 17a and 17b (Figure 3) for a substantially L-shaped arm 18, one end of which is fitted to a shaft 19 fitted through casing 15 to oscillate about a respective axis 20 (Figure 3) parallel to axis 10, and the free end of which is fitted with a gripper 21 for conveying a cartridge 3.

Gripper 21 is substantially U-shaped, extends parallel to plate 9, and comprises two curved jaws or arms 22 and 23; arm 22 is integral with the free end of arm 18; and arm 23 is connected to one end of arm 22 to oscillate - with respect to arms 18 and 22, about an axis 24 parallel to axis 20, and in opposition to a spring 25 (Figure 3) - from a normal closed position, in which arms 22 and 23 define a movable, cylindrical seat 26 having an axis 27 parallel to axis 20, to a parted open position (Figure 3). Seat 26 is open at the axial ends and towards infusion seat 8, has an inside diameter approximately equal to but no smaller than the diameter of lateral wall 4 of cartridge 3, and extends about axis 27 by an angle of just over 180° and preferably of about 200°. Arms 22 and 23 have respective bottom surfaces 28 substantially coplanar with a top surface 29 of plate 9; and respective top surfaces 30 coplanar with each other, parallel to surfaces 28, and at a distance from surfaces 28 approximately equal to but no greater than the height of lateral wall 4 of cartridge 3 minus the height of rib 5.

The bottom end of shaft 19 projects from the bottom of casing 15 and is connected, via the interposition of an articulated quadrilateral 31, to an output shaft 32 of a reduction unit 33 fitted to casing 15 by ties 34 and having an input connected to an output shaft 35 of an electric motor 36. Articulated quadrilateral 31 comprises a crank 37 fitted to shaft 32; a connecting rod 38 fitted to shaft 19; and a further connecting rod 39 connecting crank 37 and connecting rod 38, so that, in response to one-way rotation of shaft 32 about its own axis parallel to axis 20, shaft 19 oscillates about axis 20 to move seat 26 along a curved path P (Figure 3) between a loading position 40, in which seat 26 is accessible from the outside and arm 18 contacts microswitch 17a, and an infusion position 42, in which seat 26 is coaxial with axis 10 and arm 18 is positioned with a catch 41 contacting microswitch 17b.

An unloading station 43 for waste cartridges 3 is located along path P, between loading position 40 and infusion position 42, and comprises a skimming device 44, in turn comprising a block 45 fitted to plate 9 alongside infusion seat 8, a bar 46 integral with block 45 and extending crosswise to axis 10 through a central portion of path P, and an elastically deformable plate 47 projecting from bar 46. Plate 47 is substantially rectangular, slopes downwards towards seat 8, and has an edge 48 over path P and substantially coplanar with top surfaces 30 of arms 22 and 23.

As shown in Figure 3, on the side facing away from path P, infusion seat 8 is defined by a locating block 49 located in a fixed position on plate 9 and having a semicylindrical cavity 50 coaxial with axis 10 and facing movable seat 26. Locating block 49, which is theoretically optional, has two recesses 51 formed on opposite sides of cavity 50 and for receiving respective end portions of arms 22 and 23 when gripper 21 is moved by arm 18 into infusion position 42.

Finally, two pins 52, parallel to axis 10, extend downwards from the surface of sprinkler 14 facing plate 9, and, when gripper 21 is in infusion position 42, engage respective holes 53 formed through respective arms 22 and 23 to lock arms 22 and 23 in the closed position contacting lateral wall 4 of cartridge 3 carried by gripper 21.

Operation of machine 1 will now be described as of the instant in which arm 18 is positioned contacting microswitch 17a, with the empty gripper 21 in loading position 40.

At this point, the user inserts a new cartridge 3 inside movable seat 26, so that lateral wall 4 of cartridge 3 is positioned between arms 22 and 23, and rib 5 contacts top surface 30 of arms 22 and 23. The user then starts machine 1 by pressing a start button (not shown), which activates motor 36 and rotates shaft 19 about axis 20, so that arm 18 rotates about axis 20 to move gripper 21 along path P into infusion position 42 via unloading station 43.

As gripper 21 travels through unloading station 43, the free edge 48 of plate 47 slides along the top surface 30 of arms 22 and 23 and therefore along the top of cartridge 3. Being inclined, however, plate 47 does not interfere with the movement of cartridge 3 into infusion position 42, but, rather, provides for seating cartridge 3 properly inside movable seat 26.

Once past unloading station 43, gripper 21 is fed by arm 18 into infusion position 42, in which it is arrested by catch 41 of arm 18 contacting microswitch 17b, and lateral wall 4 of cartridge 3 simultaneously contacting the bottom of cavity 50. At this point, cartridge 3 is coaxial with axis 10 and is seated precisely inside infusion seat 8, and activation of microswitch 17b stops arm 18 and simultaneously opens a discharge valve (not shown) on boiler 12, so that sprinkler 14 is lowered, engages cartridge 3 in fluidtight manner and grips it in fluidtight manner against wall 9, and, at the same time, inserts pins 52 inside holes 53 to lock arms 22 and 23 with respect to each other.

Once infusion is completed, the user presses a button (not shown) to cut off the hot water supply from boiler 12, so that sprinkler 14 is raised and arm 18 and gripper 21 move back into loading position 40.

As gripper 21 travels through unloading station 43, plate 47 slides along the top surfaces 30 of arms 22 and 23 so that edge 48 engages the rib of the used cartridge 3 to rotate arm 23 outwards in opposition to spring 25 and so expel cartridge 3 laterally from movable seat 26.

In connection with the above, it should be pointed out that, in machine 1 described above, cartridge 3 is fed accurately and fully automatically into infusion position 42 with no external force applied, and that cartridge 3 is locked inside infusion seat 8 with no assistance by springs or similar.

## Claims

1. An espresso coffee machine comprising an infusion unit (2) for receiving a disposable filter defined by a cylindrical cartridge (3) containing at least one measure of ground coffee, and wherein the infusion unit (2) comprises an infusion seat (8), and a hot-water sprinkler (14) defining the top of the infusion seat (8) and movable, in use, to engage a said cartridge (3) in fluidtight manner inside the infusion seat (8); the machine being **characterized in that** said infusion unit (2) also comprises a powered loading arm (18) in turn comprising a gripper (21) for a said cartridge (3); said loading arm (18) being movable to move said gripper (21) along a given path (P) between said infusion seat (8) and an externally accessible loading position (40) for a said cartridge (3) and via an unloading station (43) for waste cartridges (3).

2. A machine as claimed in Claim 1, wherein said loading arm (18) is mounted to rotate, with respect to said infusion seat (8), along a plane coplanar with the infusion seat (8).

3. A machine as claimed in Claim 1 or 2, wherein the loading arm (18) has a free end fitted integrally with said gripper (21).

4. A machine as claimed in one of the foregoing Claims, wherein said gripper (21) is a U-shaped gripper normally closed to define a movable seat (26) for a said cartridge (3); said gripper (21) being elastically deformable to and from an open configuration to release said cartridge (3).

5. A machine as claimed in Claim 4, wherein said infusion seat (8) has a first axis (10); and said movable seat (26) is a cylindrical seat having a second axis (27) parallel to said first axis (10), is open at the top and bottom, is open on the side facing said infusion seat (8), and extends about said second axis (27) by an angle of just over 180°.

6. A machine as claimed in Claim 5, wherein said angle is about 200°.

7. A machine as claimed in Claim 5 or 6, wherein said infusion seat (8) comprises a fixed plate (9) for supporting a said cartridge; and a locating block (49) located in a fixed position on said plate (9) and having a semicylindrical cavity (50) coaxial with said first axis (10) and facing said movable seat (26).

8. A machine as claimed in Claim 7, wherein two recesses (51) are formed on said locating block (49), on opposite sides of said cavity (50), to receive respective ends of said gripper (21).

9. A machine as claimed in one of Claims 5 to 8, wherein said loading arm (18) is mounted to rotate about a third axis (20) parallel to said first and said second axis (10, 27), so as to move said movable seat (26) to and from an infusion position (42) coaxial with said first axis (10).

10. A machine as claimed in one of Claims 5 to 9, wherein said gripper (21) comprises a first and a second curved arm (22, 23) movable elastically with respect to each other and in opposition to elastic return means (25) to move the gripper (21) into said open configuration.

11. A machine as claimed in Claim 10, wherein said first arm (22) is integral with said loading arm (18), and said second arm (23) is fitted to said first arm (22) to rotate about a fourth axis (24) parallel to said second axis (27) and in opposition to said elastic means (25).

12. A machine as claimed in Claim 10 or 11, wherein locking means (52) are carried by said sprinkler (14) to lock said first and said second arm (22, 23) with respect to each other when said movable seat (26) is in said infusion position (42).

13. A machine as claimed in one of the foregoing Claims, wherein said infusion unit (2) also comprises a skimming device (44) located along the path (P) of said gripper (21), at said unloading station (43); said skimming device (44) engaging a said cartridge (3) carried by said gripper (21), to release the cartridge (3) from said gripper (21) as the gripper (21) travels, in use, through said unloading station (43) into said loading position (40).

14. A machine as claimed in Claim 13, wherein said skimming device (44) comprises an elastically deformable plate (47), which is located over and flush with said gripper (21) when the gripper (21) is in said unloading station (43), and slopes towards the infusion seat (8) to engage a portion (5) of said cartridge (3) projecting over said gripper (21).
